# EUROPEAN PATENT SPECIFICATION

(11) **EP 1 693 238 B1**
(45) Date of publication and mention of the grant of the patent: **07.04.2010**
(21) Application number: 04819377.5
(22) Date of filing: 24.11.2004
(51) Int. Cl.: B60K 6/36, B60K 6/40, B60K 6/405, B60K 6/547, B60K 6/48

(54) **VEHICLE DRIVING MECHANISM**
FAHRZEUGANTRIEBSMECHANISMUS
MECANISME D'ENTRAINEMENT DE VEHICULE

(30) Priority: 26.11.2003 JP 2003394879
(43) Date of publication of application: 23.08.2006
(73) Proprietor: AISIN SEIKI KABUSHIKI KAISHA, Kariya-shi, Aichi 448-8650 (JP)
(72) Inventor: MORI, Masanori, AISIN SEIKI KABUSHIKI KAISHA, Kariya-shi, Aichi 4488650 (JP)
(74) Representative: TBK-Patent
(86) International application number: PCT/JP2004/017424
(87) International publication number: WO 2005/051698

(56) References cited:
- EP-A- 1 201 479
- EP-A- 1 205 330
- JP-A- 11 078 554
- JP-A- 2001 206 085
- JP-A- 2002 160 540
- JP-A- 2002 225 578
- JP-A- 2004 210 028

## Description

### BACKGROUND OF THE INVENTION

### FIELD OF THE INVENTION

This invention relates to the drive mechanism for a vehicle, and more particularly to a drive mechanism that has two kinds of driving sources (engines/motors), and that moves the vehicle by using both driving sources together or by switching between them.

### TECHNICAL BACKGROUND

In recent years, the development of an automatic-manual transmission (hereafter referred to as AMT) in which an automatic-clutch mechanism, and automatic-transmission mechanism are installed in a manually operated gear-engagement-type transmission, which has excellent transmission efficiency, and controlled electronically has been advancing. In this automatic-manual transmission method, the clutch operation and gear- shifting operation are performed automatically according to the amount of acceleration given by the driver and the operating state of the vehicle, however, when shifting gears, the clutch is released and a gear-shifting operation is performed, so during that time the engine's driving force is lost and there is a feeling of so-called sluggishness.

Also, recently, hybrid vehicles designed for obtaining low-levels of exhaust gas and low fuel consumption have received much attention; and as a method of reducing or preventing the aforementioned sluggishness, a method is under study in which an electric motor is used as a second driving source, and when the clutch is released, the driving force of the motor is transmitted to the tires to prevent a decrease in driving force. A hybrid vehicle that uses this method is called an automatic- manual transmission hybrid vehicle (AMT-HV), and reference documents related to this include Japanese Patent Kokai Publications No.H11-69509-A, No.H11-141665-A, and No.2002-160540-A.

In the transmission-control apparatus disclosed in Japanese Patent Kokai Publication No.H11-69509-A, the output from an internal-combustion engine is transmitted to the drive wheels by way of the transmission and differential, and the motor that functions as a second driving source is connected between the transmission and differential by a gear mechanism. Moreover, when the clutch is released, the driving force from the motor is transmitted to the differential and drive wheels by way of a drive mechanism, so, respectively, it is possible to prevent a loss of driving force and alleviate the feeling of sluggishness.

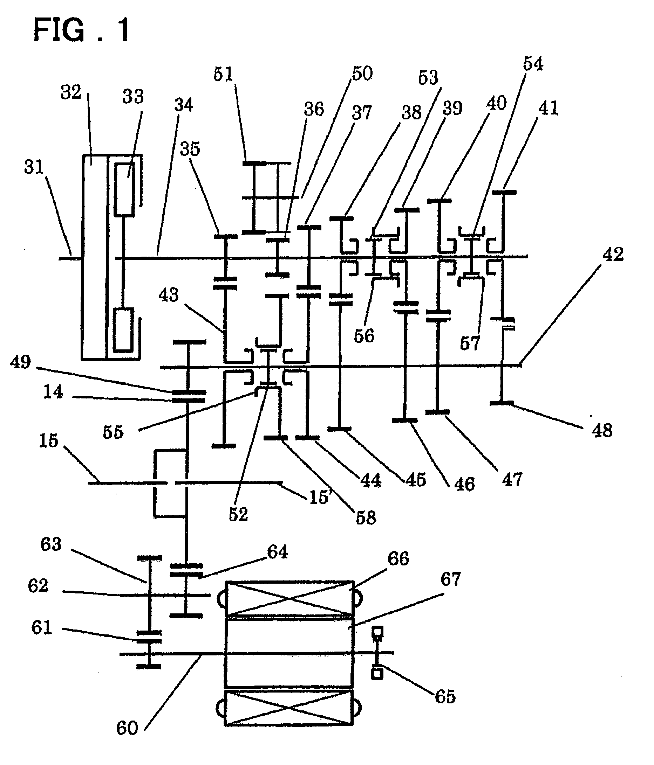

Moreover, in Japanese Patent Kokai Publication No.H11-141665-A, an automatic transmission is introduced in which a gear mechanism (connected to the 4-speed gear as shown in FIG. 1 of the publication) that transmits the motor output is installed inside the transmission, and, reportedly, similarly makes it possible to alleviate the aforementioned feeling of sluggishness.

Furthermore, in Japanese Patent Kokai Publication No. 2002-160540, a method is introduced in which a gear is formed in the differential case to transmit motor force (see FIG. 1 of the publication). In this method, it is, reportedly, possible to similarly alleviate the feeling of sluggishness, and to reduce the amount of changes made to the inside of the transmission.

Furthermore, a vehicle drive mechanism according to the preamble of claim 1 is known from EP-A-1 205 330. Another vehicle drive mechanism is disclosed im EP-A-1 201 479.

### DISCLOSURE OF THE INVENTION

### PROBLEMS TO BE SOLVED BY THE INVENTION

However, in the method disclosed in aforementioned Japanese Patent Kokai Publication No.H11-69509, considering the size of the torque required by the motor shaft, when the clutch is released, it is necessary to match the motor torque with the torque driven by the engine up to that time, so a very large motor is necessary, and so there are problems in that the space for installation in the vehicle is limited, and the cost is high. Also, in the method disclosed in Japanese Patent Kokai Publication No.H11-141665, it is possible to avoid the problem of an increase in the size of the motor, however, when operating the engine and motor at the same time, it is necessary to increase the strength of the parts being acted upon by both (gear 64, output shaft 60 (shown in FIG. 1 of the publication), differential (not shown in the figures), etc.), so there is a possibility that the amount of design work and cost will increase.

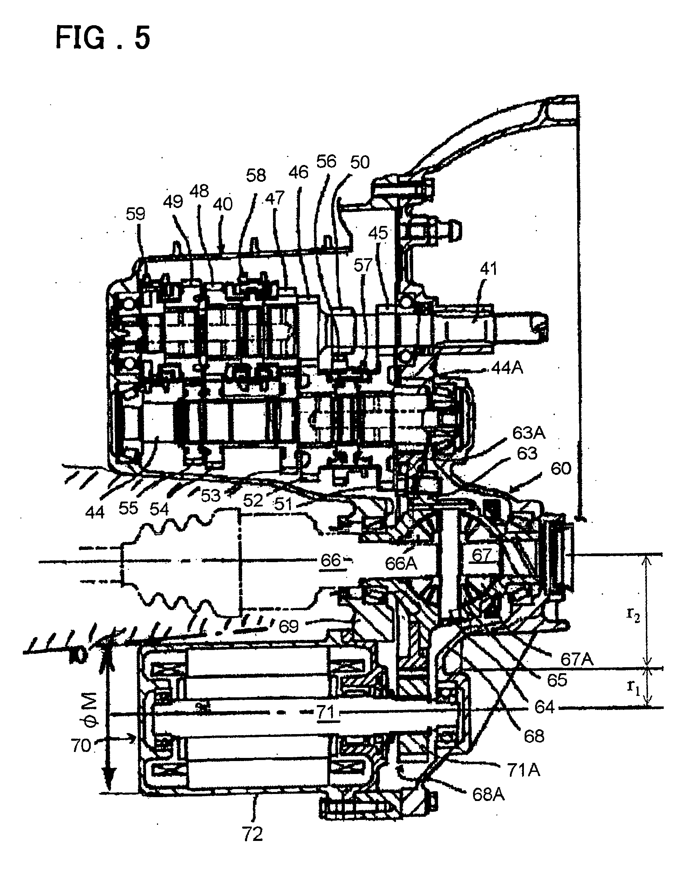

On the other hand, in the drive apparatus disclosed in Japanese Patent Kokai Publication No.2002-160540, it is possible to reduce costs by using add-on construction that uses many conventional parts, however, as shown in FIG. 5, the distance between the drive shaft (66 in FIG. 5) and the rotating shaft (71 in FIG. 5) of the motor is determined by creating the necessary reduction ratio between the motor (70 in FIG. 5) and the differential (63 in FIG. 5) (expressed as the ratio r2/r1 of the radius r1 of a gear (71A in FIG. 5) that is formed around the rotating shaft (71 in FIG. 5) of the motor shown in FIG. 5, and the radius r2 of a ring gear (63A in FIG. 5) on the side of the differential (63 in FIG. 5)), so in order to maintain the operating range of the drive shaft (enclosed area in FIG. 5) according to the turning or road surface conditions, restrictions in the size of the motor (diameter φ M, shaft length) occur. Also, under these restrictions, if the size of the motor used does not output the required driving force, and if the aforementioned reduction ratio that is to be used by a large motor is too small, it may not be possible to output the required torque.

### [SUMMARY OF THE INVENTION]

Taking the aforementioned problems into consideration, it is an object of the present invention to provide a low-cost add-on type drive mechanism that is capable of removing the aforementioned feeling of sluggishness, and makes little changes to a conventional drive mechanism that uses only an internal combustion engine as its driving source.

According to the invention the above object is solved with a vehicle drive mechanism having the features of claim 1.

### EFFECTS OF THE INVENTION

With this invention, the drive force from the engine acts only on the power transmission portion of the automatic transmission, so most of the parts can be shared, making it possible to lower cost, and when compared with the same kind of conventional mechanism, it is possible to obtain sufficient driving force and torque.

### PREFERRED MODES FOR EMBODYING THE INVENTION

A preferred embodiment of the invention will be explained below. The drive mechanism for a vehicle of this embodiment comprises: a first drive gear (49 in FIG. 1) that is formed around the output shaft (42 in FIG. 1) of a gear-type transmission (top of FIG. 1); and on the electric-motor side (bottom in FIG. 1), comprises a prime-driving gear (61 in FIG. 1) that is formed around an output shaft of an electric motor that is located parallel with the output shaft (42 in FIG. 1) of the transmission; and an intermediate reduction shaft (62 in FIG. 1) that is located parallel with the output shafts (42, 60 in FIG. 1) of the gear-type transmission and electric motor. A driven gear (63 in FIG. 1) that engages with the prime-driving gear (61 in FIG. 1) on the electric-motor side and a second drive gear (64 in FIG. 1) are formed around the intermediate reduction shaft (62 in FIG. 1). The first drive gear (49 in FIG. 1) and second drive gear (64 in FIG. 1) engage with a ring gear (final gear) (14A in FIG. 1) of the differential (14 in FIG. 1). Also, there is a rotational sensor (65 in FIG. 1) located on one end of the output shaft (60 in FIG. 1) of the electric motor.

With the drive mechanism of this embodiment constructed as described above, the output from the electric motor (bottom in FIG. 1) acts on the differential (14 in FIG. 1), so there is no need to increase the strength of the support members for each of the gears and shafts (34, 42 in FIG. 1) of the automatic transmission (AMT), and it is possible to keep the construction of the transmission (AMT) portion as is; also when the clutch is released when shifting gears, the driving force from the motor drives the differential gear (14 in FIG. 1) by way of the reduction mechanism and second drive gear (64 in FIG. 1) according to the gear ratio between the prime-driving gear (61 in FIG. 1) and the first driven gear (63 in FIG. 1), thus making it possible to do away with the feeling of sluggishness.

Moreover, when the vehicle is in operation, the rpm value that is obtained from the constantly operating rotational sensor (65 in FIG. 1) is proportional to the vehicle speed, so it can be used in the ECU (Electronic Control Unit) (not shown in the figure) for transmission control or drive control of the motor. Furthermore, by sending a signal to an indicator on the driver's side, it becomes possible to do away with a vehicle speed sensor that is placed near the conventional differential apparatus (14 in FIG. 1).

### EMBODIMENT

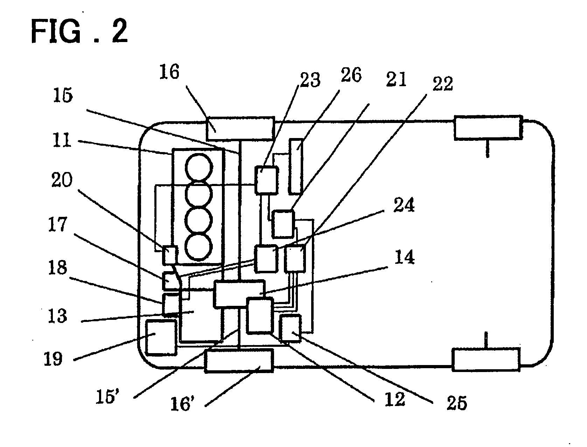

Next, this first embodiment of the invention will be explained in detail based on the drawings. FIG. 1 is a skeleton drawing showing the main construction (4-speed state) of the drive mechanism of this embodiment; and FIG. 2 is a block diagram showing the construction of a hybrid vehicle in which the drive mechanism of this embodiment is installed. First, referring to FIG. 2, the construction of the hybrid vehicle of this embodiment will be explained. The hybrid vehicle of this embodiment has two kinds of driving sources, an engine as typified by an internal combustion engine (hereafter abbreviated as E/G) 11, and a motor generator (hereafter abbreviated as MG) 12 that is driven by electricity that is stored in a battery 19. The output from the engine 11 is transmitted to the transmission 13, and then, is transmitted to axle shafts 15, 15' and drive wheels 16, 16' by way of the differential apparatus 14 that functions as an output unit, and drives the vehicle. The output from the MG 12 can similarly move the vehicle by way of the differential apparatus 14.

The hybrid vehicle of this embodiment also comprises: a HV-ECU 21 (Hybrid Vehicle Electronic Control Unit) that performs overall vehicle control; a MG-ECU and inverter 22 that gives instructions to the MG 12 to drive or regenerate; an E/G-ECU 23 that controls the stopping and ignition states of the engine 11; a clutch actuator 17 that is built into the transmission 13, an AMT-ECU 24 that controls a gear-shifting actuator 18 and performs optimum gear shifting; and a battery ECU 25 that controls the charging state of the battery 19. The HV-ECU 21 receives the driving intentions from the driver and controls and manages the MG-ECU and inverter 22, E/G-ECU 23 and battery ECU 25. Moreover, the E/G-ECU 23 together with the AMT-ECU 24 produces the optimum ignition state, and performs ignitions control when starting the engine with a starter 20. Also, an indicator 26 that displays the speed of the vehicle is located near the driver's seat.

Next, referring to FIG. 1, the drive mechanism of this embodiment will be explained. First, to explain the construction on the transmission side 13, a flywheel 32 is fastened to the end of an output shaft 31 of the engine 11, and a clutch element 33 is installed on the flywheel 32 and can be engaged or released by a clutch actuator 17. Driver members of the clutch are installed and integrated with the input shaft 34 of the transmission 13 in the direction of rotation with a spline or the like. On the input shaft 34, the drive gears 1st 35, Rev 36 and 2nd 37 are arranged in order from the clutch side and mounted such that they are integrated with the input shaft 34, and furthermore drive gears 3rd 38, 4th 39, 5th 40 and 6th 41 are mounted so that they are toratable free. Moreover, the output shaft 42 of the transmission 13 is located parallel with the input shaft 34, and driven gears 1st 43 and 2nd 44 are mounted on it so that they are free rotatable in locations where they can engage with the aforementioned gears, and driven gears 3rd 45, 4th 46, 5th 47 and 6th 48 are mounted such that they are integrated with the output shaft 42. Also, a drive gear 49 is mounted on the end section on the clutch side of the output shaft 42 of the transmission 13 such that it is integrated with the output shaft 42, and it engages with a ring gear (final gear) 14A that is located on the case of the differential apparatus 14. Furthermore, on the side of the transmission 13, a shaft 50 is located that is parallel with the input shaft 34 of the transmission 13, and a Reverse-idler gear 51 is mounted on this shaft 50 so that it rotates freely. The ilder gear can also move in the axial direction, and when it is in a location on the clutch side (thick solid line), it is not engaged with the Rev drive gear 36, however, when it is in a location on the side of the 6th drive gear 41, it can be engaged with the Rev drive gear 36.

Hub members 52, 53, 54 that turn statically with each of the shafts are located between the drive gears and driven gears of the input shaft 34 and output shaft 42 of the transmission 13. Each of the hub members has a joint such as a spline on its outer surface, and furthermore by engaging with sleeves 55, 56, 57 that are located around their outer surface, and moving the sleeves in the axial direction (left-right in the figure) by the gear-shifting actuator 18, the sleeves can engage with a spline formed on the gear on the right side or the left side so that power can be transmitted, or can be in a neutral position where it is not engaged with any gears. In FIG. 1, when the sleeve 57 moves to the right, it is in the 4-speed state. Also, a gear 58 is located around the sleeve 55 on the output shaft 42 between 1st 43 and 2nd 44 in the portion that extends further outward, and when the Rev idler gear 51 is engaged with the Rev drive gear 36, gear 58 engages with the idler gear 51, so that it has two states, a neutral state and Rev drive state.

As described above, when the clutch is engaged by the clutch actuator 17, the driving force from the engine 11 is transmitted to the first drive gear 49 on the end of the output shaft 42 according to the gear ratio that was selected by the gear-shifting actuator 18.

On the other hand, the driving force that is output by MG 12 is transmitted to the prime-driving gear 61 that is located and integrated on the end of the MG output shaft 60. A driven gear 63 that engages with the prime-driving gear 61, and a second drive gear 64 that engages with a ring gear (final gear) 14A that is located on the case of the differential apparatus 14 are located on an intermediate reduction shaft 63 that is located parallel with the MG output shaft 60, and the drive force from MG 12 is transmitted to the second drive gear 64 at a specified reduction ratio.

With the construction described above, under control of the HV-ECU 21 (Hybrid Vehicle Electronic Control Unit), the output from the engine 11 and MG 12 is transmitted to the ring gear (final gear) 70, and by way of the differential apparatus 14, any difference in rpm is absorbed as needed, and the axle shaft 15, 15' and drive wheels 16, 16' are driven.

Also, the MG 12 has a power running state in which electric power is received and converted to driving force, and a generating state in which driving force is converted to electric power, and by using three-phase electric power to cause large electric current to flow at an optimal position for the magnetic force generated by a stator 66 to pass and return to an iron (steel) portion of the rotor, control, including control of the generation of driving force and the direction of rotation, is performed so that efficient conversion is possible.

A resolver 65 is installed on the opposite side of the output shaft of MG 12 as an rpm detecting apparatus. The resolver 65 detects the relative angle between the rotor 67 that rotates integrally with the MG output shaft 60, which can then be used as a resolver signal. For example, by calculating a numerical value that depends on the number of poles of the MG 12 and the gear ratio on the side of the MG 12, it is possible to use the resolver signal as a vehicle speed signal. In this embodiment, the signal drives the indicator 20 on the operation panel by way of the HV-ECU 21 and E/G-ECU.

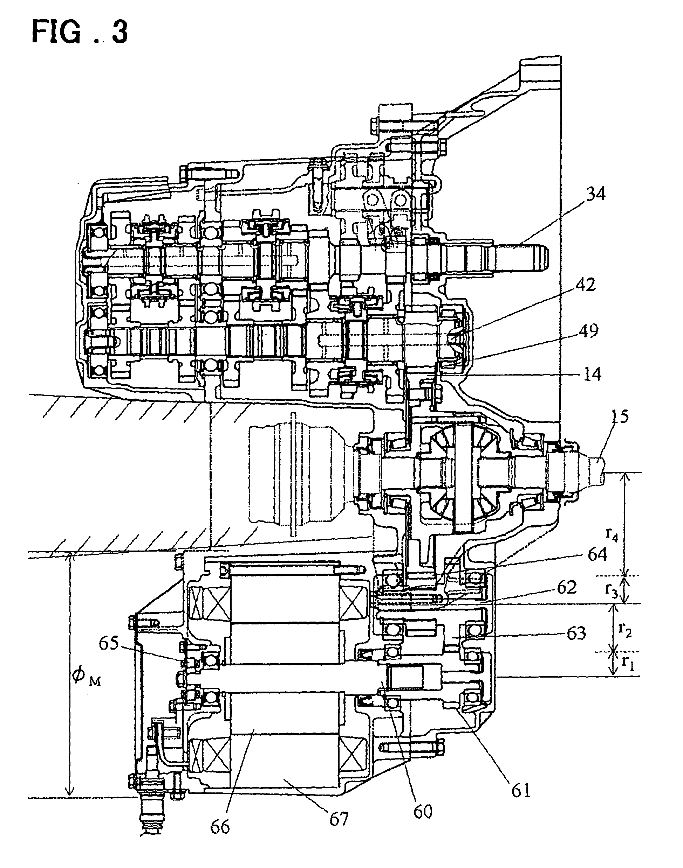

FIG. 3 is a cross-sectional drawing showing the detailed construction of the drive mechanism of this embodiment, where the ring gear (final gear) 70 located on outside of the case of the differential apparatus 14 engages with the first drive gear 49 on the output shaft 42 on the transmission side, and the second drive gear 64 of the intermediate reduction shaft 62 on the MG side. Also, the second drive gear 64 is constructed so that it is driven by way of the driven gear 63 located on the same shaft, and the prime-driving gear 61 on the side of the MG 12.

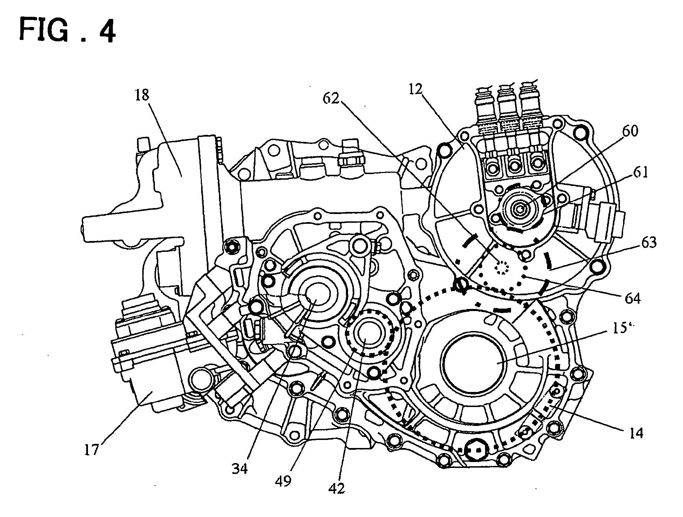

FIG. 4 is a side view showing the detailed construction of the drive mechanism of this embodiment, where the bold dot-dashed circles in the drawing indicate the pitch circle of the prime-driving gear 61 and the pitch circle of the driven gear 63 of the intermediate reduction shaft 62, and the bold dotted circles indicate the position of the intermediate reduction shaft 62 on the MG side, and the pitch circles of the first and second drive gears 49, 64 and the ring gear (final gear) 14A located on the case of the differential apparatus 14. As can be clearly seen from FIG. 3 and FIG. 4, the drive mechanism of this embodiment can be constructed so that it has the form of an add-on to the an existing transmission 13. Also, in comparison with the conventional method of directly transmitting driving force from the motor to the side of the differential, by suitably setting the radii of the second drive gear 64, prime-driving gear 61 and driven gear 63 (r3, r1, r2), it is possible to maintain the necessary reduction ratio r4/r3 x r2/r1. In addition, restrictions on distance between the MG 12 and axle shaft 15 are removed, therefore it is possible to use a large-diameter motor and to obtain the necessary drive force and torque that are suitably set according to the elements of the motor and vehicle. Moreover, since it is not necessary to use a motor having a long shaft, maintaining the range of action of the drive shaft (enclosed area in FIG. 3) is no problem.

Also, in this embodiment, the resolver signal from the MG 12 is used as the vehicle-speed signal, so it is possible to do away with the vehicle-speed sensor that is attached to a conventional manually operated gear-engagement-type transmission, so construction is possible in which it is possible to make the vehicle drive mechanism more compact and lower cost.

An embodiment of the invention was explained above, however, the drive mechanism of this invention is not limited to being used just when shifting gears, but is also capable of performing control using the driving force from the motor that functions as a second prime mover in situations of helping the driving force from the engine in order to increase the acceleration or increase the climbing power, running under just the drive motor, stopping or restarting the engine when the engine is stopped, or preventing down-slippage upon starting at a sloped road. Moreover, in the case of regenerating the kinetic energy of the vehicle into electrical power when decelerating in these situations, it is of course possible to assist the driving force of an engine that uses this regenerated energy, which is very effective in improving fuel consumption.

### BRIEF EXPLANATIONS OF THE DRAWINGS

[Fig. 1] Fig. 1 is a skelton drawing showing schematic view (4-speed state) of a drive mechanism relating to an embodiment of the present invention.
[Fig. 2] Fig. 2 is a block diagram showing a construction of a hybrid vehicle.
[Fig. 3] Fig. 3 is a cross sectional drawing showing a concrete construction of a drive mechanism relating to an embodiment of the present invention.
[Fig. 4] Fig. 4 is a side view showing a concrete construction of a drive mechanism relating to an embodiment of the present invention. [Fig. 5] Fig. 5 is a cross sectional drawing showing a drive mechanism of a hybrid vehicle of a prior art.

### EXPLANATION OF SYMBOLS

- 11: engine
- 12: motor generator (MG)
- 13: transmission
- 14: differential
- 15,15': axle shaft
- 16,16': driving wheel
- 17: clutch actuator
- 18: gear-shift actuator
- 19: battery
- 20: stator
- 21: HV-ECU
- 22: MG-ECU and inverter
- 23: E/G-ECU
- 24: AMT-ECU
- 25: battery ECU
- 26: indicator
- 31: output shaft
- 32: flywheel
- 33: clutch element
- 34: input shaft of transmission
- 35: 1st drive gear
- 36: Rev drive gear
- 37: 2nd drive gear
- 38: 3rd drive gear
- 39: 4th drive gear
- 40: 5th drive gear
- 41: 6th drive gear
- 42: output shaft of transmission
- 43: 1st driven gear
- 44: 2nd driven gear
- 45: 3rd driven gear
- 46: 4th driven gear
- 47: 5th driven gear
- 48: 6th driven gear
- 49: 1st drive gear
- 50: Rev idler gear shaft
- 51: Rev idler gear
- 52,53,54: hub member
- 55,56,57: sleeve member
- 58: gear
- 60: MG output shaft
- 61: prime-driving gear
- 62: intermediate reduction shaft
- 63: driven gear
- 64: second drive gear
- 65: resolver
- 66: stator member
- 67: rotor member
- 14A: ring gear (final gear)

## Claims

1. A vehicle drive mechanism comprising:
an engine (11);
an automatic transmission (13) having a clutch actuator (17) and a gear-shifting actuator (18);
a first drive gear (49) formed on an output shaft (42) of the automatic transmission (13); and
a differential apparatus (14) that transmits torque from said output shaft (42), which is input via the drive gear (49), to each drive wheel side;
an electric motor (12);
a prime-driving gear (61) formed on an output shaft (60) of said electric motor (12) that is arranged parallel with the output shaft (42) of said transmission (13); **characterized in that** the drive mechanism further comprises:
an intermediate reduction shaft (62) arranged parallel with the output shafts (42, 60) of said transmission (13) and electric motor (12); and
a second drive gear (64) that is formed on said intermediate reduction shaft (62) and transmits torque from the output shaft (60) of said electric motor (12) to said differential apparatus (14), wherein
a driven gear (63) that engages with the prime-driving gear (61) of said electric motor (12) is formed on said intermediate reduction shaft (62), and said driven gear (63) and said second drive gear (64) are set at a specified reduction ratio so that the driving force from said electric motor (12) is transmitted to said differential apparatus (14) at that specified reduction ratio.

2. The vehicle drive mechanism as defined in claim 1 **characterized by** further comprising a rotational sensor (65) located on one end of the output shaft (60) of said electric motor (12).

3. The vehicle drive mechanism as defined in claim 2 **characterized in that** a signal from said rotational sensor (65) is used as a vehicle-speed signal.

4. The vehicle drive mechanism as defined in any one of claims 1 to 3 **characterized in that** the driven gear (63) provided on said intermediate reduction shaft (62) has a radius (r2) greater than the radius (r3) of the second drive gear (64).

5. The vehicle drive mechanism as defined in any one of claims 1 to 4 **characterized in that** said gear-shifting actuator (18) of said automatic transmission (13) shifts gears by moving a sleeve.

6. The vehicle drive mechanism as defined in any one of claims 1 to 5 **characterized in that** said clutch actuator (17) of said automatic transmission (13) engages or releases a clutch.

7. The vehicle drive mechanism as defined in any one of claims 1 to 6 **characterized in that** the electric motor (12) of said vehicle drive mechanism is a motor-generator (MG) that can be switched between a power running state that converts electric power to driving force, and a regeneration state that converts driving force to electric power.

8. The vehicle drive mechanism as defined in any one of claims 1 to 7 **characterized in that** said electric motor (12) assists the driving force when shifting gears.

9. The vehicle drive mechanism as defined in any one of claims 1 to 8 **characterized in that** said electric motor (12) assists the driving force upon down-slippage at starting on a sloped road.

10. The vehicle drive mechanism as defined in claim 6 **characterized in that** said motor-generator (MG) assists the driving force when shifting gears.

## Patentansprüche

1. Fahrzeugantriebsmechanismus mit:
einer Maschine (11);
einem Automatikgetriebe (13), das einen Kupplungsaktuator (17) und einen Gangwechselaktuator (18) aufweist;
einem ersten Antriebszahnrad (49), das an einer Ausgangswelle (42) des Automatikgetriebes (13) ausgebildet ist; und
einem Differenzialgerät (14), das ein Moment von der Ausgangswelle (42), welches über das Antriebszahnrad (49) eingegeben wird, zu jeder Antriebsradseite überträgt;
einem Elektromotor (12);
einem Primärantriebszahnrad (61), das an einer Ausgangswelle (60) des Elektromotors (12) ausgebildet ist, die parallel zu der Ausgangswelle (42) des Getriebes (13) angeordnet ist,
**dadurch gekennzeichnet, dass**
der Antriebsmechanismus ferner aufweist:
eine Zwischenuntersetzungswelle (62), die parallel zu den Ausgangswellen (42, 60) des Getriebes (13) und des Elektromotors (12) angeordnet ist; und
ein zweites Antriebszahnrad (64), das an der Zwischenuntersetzungswelle (62) ausgebildet ist und ein Moment von der Ausgangswelle (60) des Elektromotors (12) zu dem Differenzialgerät (14) überträgt, wobei
ein angetriebenes Zahnrad (63), das mit dem Primärantriebszahnrad (61) des Elektromotors (12) in Eingriff ist, an der Zwischenuntersetzungswelle (62) ausgebildet ist, und das angetriebene Zahnrad (63) und das zweite Antriebszahnrad (64) auf ein bestimmtes Untersetzungsverhältnis eingestellt sind, so dass die Antriebskraft von dem Elektromotor (12) mit einem bestimmten Untersetzungsverhältnis zu dem Differenzialgerät (14) übertragen wird.

2. Fahrzeugantriebsmechanismus gemäß Anspruch 1, **dadurch gekennzeichnet, dass** er ferner einen Drehsensor (65) aufweist, der sich an einem Ende der Ausgangswelle (60) des Elektromotors (12) befindet.

3. Fahrzeugantriebsmechanismus gemäß Anspruch 2, **dadurch gekennzeichnet, dass** ein Signal von dem Drehsensor (65) als ein Fahrzeuggeschwindigkeitssignal verwendet wird.

4. Fahrzeugantriebsmechanismus gemäß einem der Ansprüche 1 bis 3, **dadurch gekennzeichnet, dass** das angetriebene Zahnrad (63), das an der Zwischenuntersetzungswelle (62) vorgesehen ist, einen Radius (r2) aufweist, der größer als der Radius (r3) des zweiten Antriebszahnrads (64) ist.

5. Fahrzeugantriebsmechanismus gemäß einem der Ansprüche 1 bis 4, **dadurch gekennzeichnet, dass** der Gangwechselaktuator (18) des Automatikgetriebes (13) Gänge durch Bewegen einer Muffe schaltet.

6. Fahrzeugantriebsmechanismus gemäß einem der Ansprüche 1 bis 5, **dadurch gekennzeichnet, dass** der Kupplungsaktuator (17) des Automatikgetriebes (13) eine Kupplung ein- oder ausrückt.

7. Fahrzeugantriebsmechanismus gemäß einem der Ansprüche 1 bis 6, **dadurch gekennzeichnet, dass** der Elektromotor (12) des Fahrzeugantriebsmechanismus ein Motor-Generator (MG) ist, der zwischen einem Leistungslaufzustand, der elektrische Leistung in eine Antriebskraft umwandelt, und einem Regenerierungszustand umgeschalt werden kann, der eine Antriebskraft in elektrische Leistung umwandelt.

8. Fahrzeugantriebsmechanismus gemäß einem der Ansprüche 1 bis 7, **dadurch gekennzeichnet, dass** der Elektromotor (12) die Antriebskraft beim Schalten der Gänge unterstützt.

9. Fahrzeugantriebsmechanismus gemäß einem der Ansprüche 1 bis 8, **dadurch gekennzeichnet, dass** der Elektromotor (12) die Antriebskraft bei einem Abrutschen beim Starten auf einer geneigten Fahrbahn unterstützt.

10. Fahrzeugantriebsmechanismus gemäß Anspruch 6, **dadurch gekennzeichnet, dass** der Motor-Generator (MG) die Antriebskraft beim Schalten der Gänge unterstützt.

## Revendications

1. Mécanisme d'entraînement de véhicule comprenant:
un moteur (11);
une transmission automatique (13) ayant un actionneur (17) d'embrayage et un actionneur (18) de changement de vitesse;
un premier engrenage d'entraînement (49) formé sur un arbre (42) de sortie de la transmission automatique (13); et
un appareil différentiel (14) qui transmet un couple dudit arbre (42) de sortie, qui est introduit à travers l'engrenage d'entraînement (49), du côté de chaque roue motrice;
un moteur électrique (12);
un engrenage (61) d'entraînement primaire formé sur un arbre (60) de sortie dudit moteur électrique (12) qui est agencé de manière parallèle à l'arbre (42) de sortie de ladite transmission (13);
**caractérisé en ce que** le mécanisme d'entraînement comprend en plus:
un arbre (62) de réduction intermédiaire agencé de manière parallèle aux arbres (42, 60) de sortie de ladite transmission (13) et du moteur électrique (12); et
un deuxième engrenage (64) d'entraînement qui est formé sur ledit arbre (62) de réduction intermédiaire et qui transmet un couple de l'arbre (60) de sortie dudit moteur électrique (12) audit appareil différentiel (14), où
un engrenage entraîné (63) qui s'engage avec l'engrenage (61) d'entraînement primaire dudit moteur électrique (12), est formé sur ledit arbre (62) de réduction intermédiaire, et ledit engrenage entraîné (63) et ledit deuxième engrenage d'entraînement (64) sont établis à un rapport de réduction spécifié de sorte que la force d'entraînement provenant dudit moteur électrique (12) soit transmise audit appareil différentiel (14) à ce rapport de réduction spécifié.

2. Mécanisme d'entraînement de véhicule tel que défini dans la revendication 1 **caractérisé par** le fait de comprendre en plus un capteur (65) de rotation situé sur une extrémité de l'arbre (60) de sortie dudit moteur électrique (12).

3. Mécanisme d'entraînement de véhicule tel que défini dans la revendication 2 **caractérisé en ce qu'**un signal provenant dudit capteur (65) de rotation est utilisé en tant que signal de vitesse du véhicule.

4. Mécanisme d'entraînement de véhicule tel que défini dans l'une quelconque des revendications 1 à 3 **caractérisé en ce que** l'engrenage entraîné (63) pourvu sur ledit arbre (62) de réduction intermédiaire a un rayon (r2) supérieur au rayon (r3) du deuxième engrenage d'entraînement (64).

5. Mécanisme d'entraînement de véhicule tel que défini dans l'une quelconque des revendications 1 à 4 **caractérisé en ce que** ledit actionneur (18) de changement de vitesse de ladite transmission automatique (13) change des vitesses en déplaçant un manchon.

6. Mécanisme d'entraînement de véhicule tel que défini dans l'une quelconque des revendications 1 à 5 **caractérisé en ce que** ledit actionneur (17) d'embrayage de ladite transmission automatique (13) engage ou libère un embrayage.

7. Mécanisme d'entraînement de véhicule tel que défini dans l'une quelconque des revendications 1 à 6 **caractérisé en ce que** le moteur électrique (12) dudit mécanisme d'entraînement de véhicule est un moteur générateur (MG) qui peut être commuté entre un état d'alimentation de puissance qui convertit une puissance électrique en une force d'entraînement, et un état de régénération qui convertit une force d'entraînement en une puissance électrique.

8. Mécanisme d'entraînement de véhicule tel que défini dans l'une quelconque des revendications 1 à 7 **caractérisé en ce que** ledit moteur électrique (12) apporte une assistance à la force d'entraînement lors du changement de vitesses.

9. Mécanisme d'entraînement de véhicule tel que défini dans l'une quelconque des revendications 1 à 8 **caractérisé en ce que** ledit moteur électrique (12) apporte une assistance à la force d'entraînement lors du glissement au démarrage sur une route inclinée.

10. Mécanisme d'entraînement de véhicule tel que défini dans la revendication 6 **caractérisé en ce que** ledit moteur générateur (MG) apporte une assistance à la force d'entraînement lors du changement de vitesses.
